# EUROPÄISCHE PATENTSCHRIFT

(11) **EP 1 216 372 B1**
(45) Veröffentlichungstag und Bekanntmachung des Hinweises auf die Patenterteilung: **23.11.2005**
(21) Anmeldenummer: 00971303.3
(22) Anmeldetag: 29.09.2000
(51) Int. Cl.: F16J 15/34

(54) **WELLENABDICHTUNG, INSBESONDERE FÜR AXIALKOLBENVERDICHTER**
SHAFT SEAL, IN PARTICULAR FOR AN AXIAL PISTON DISPLACEMENT COMPRESSOR
ETANCHEIFICATION D'ARBRE, NOTAMMENT POUR UN COMPRESSEUR A PISTONS AXIAUX

(30) Priorität: 30.09.1999 DE 19947007
(43) Veröffentlichungstag der Anmeldung: 26.06.2002
(73) Patentinhaber: Zexel GmbH, 64331 Weiterstadt (DE)
(72) Erfinder: SCHWARZKOPF, Otfried, 71106 Magstadt (DE)
(74) Vertreter: Popp, Eugen
(86) Internationale Anmeldenummer: PCT/EP2000/009564
(87) Internationale Veröffentlichungsnummer: WO 2001/023790

(56) Entgegenhaltungen:
- EP-A- 0 195 205
- DE-A- 3 809 001
- GB-A- 653 608
- GB-A- 2 083 079
- OA-A- 1 815
- US-A- 4 095 807

## Beschreibung

### Stand der Technik

Die Erfindung betrifft eine Baugruppe bestehend aus einer Antriebswelle, einem Gehäuse mit einer Durchtrittsbohrung, durch die hindurch die Antriebswelle aus dem Gehäuse hervorsteht, und einer Axialgleitringdichtung mit Gleitring und Gegenring, die zwischen den beiden Bauteilen Antriebswelle und Gehäuse abdichtet. Allgemeiner ausgedrückt betrifft die Erfindung die Abdichtung von Wellendurchgängen mittels einer Dichtung, die im wesentlichen aus einem Gleitring und einem Gegenring besteht, gegen den der Gleitring in axialer Richtung der Welle vorgespannt ist. Die Erfindung betrifft insbesondere einen Axialkolbenverdichter, bei dem das Gehäuse mit einem Abschlußdeckel versehen ist, der mit der Durchtrittsbohrung für die Antriebswelle und einer Axialgleitringdichtung für die Antriebswelle versehen ist. Ein solcher Verdichter mit einer Baugruppe der eingangs genannten Art ist aus der EP 0 864 787 A2 bekannt.

Nachfolgend wird die Erfindung anhand eines Anwendungsbeispiels für einen Axialkolbenverdichter beschrieben, wie er insbesondere bei einer Klimaanlage für Kraftfahrzeuge verwendet werden kann. Wie aber eingangs bereits ausgeführt, ist die Erfindung allgemein auf Maschinen anwendbar, die eine Axialgleitringdichtung aufweisen.

Ein Axialkolbenverdichter einer Kraftfahrzeug-Klimaanlage dient dazu, ein Kältemittel aus einem Wärmeübertrager, in welchem es unter Wärmeaufnahme verdampft, anzusaugen und auf einen höheren Druck zu verdichten, so daß es in einem weiteren Wärmeübertrager die Wärme auf einem höheren Temperatumiveau wieder abgeben kann. Anschließend erfährt das Kältemittel in einem Expansionsorgan eine Drosselung auf das Druckniveau des ersten Wärmeübertragers. Die Funktionsweise solcher Axialkolbenverdichter in einem solchen Kältemittelkreislauf ist allgemein bekannt, so daß sie hier nicht weiter erläutert werden muß.

Ein besonders wichtiges Bauelement eines Axialkolbenverdichters, der bei einer Fahrzeug-Klimaanlage eingesetzt wird, ist die Abdichtung der Antriebswelle. Die Wellenabdichtung eines offenen Verdichters hat eine besondere Bedeutung, da Kältemittelleckagen des Kältekreislaufs, insbesondere eine Kältemittelleckage über die Wellenabdichtung, das Betriebsverhalten der Kälteanlage durch Reduktion der Kältemittelfüllmenge negativ beeinflussen. Außerdem dürfen verschiedene Kältemittel nicht in die Atmosphäre gelangen.

Für die Wellenabdichtung von Axialkolbenverdichtem für das Kältemittel R134a werden üblicherweise Radialwellendichtringe verwendet, die bei den dort auftretenden Druckdifferenzen, gegen die abgedichtet werden muß, eine ausreichend zuverlässige Abdichtung bei geringen Kosten bieten. Ein solcher Radialwellendichtring wird im allgemeinen auf der Außenseite des Gehäuses in einen Einstich eingesetzt.

In jüngster Zeit wird vermehrt der Einsatz des Kältemittels CO₂ als Ersatz für das Kältemittel R134a diskutiert, da CO₂ eine Vielzahl von Vorteilen gegenüber R134a bietet. Aufgrund des höheren Druckniveaus, welches das Kältemittel CO₂ im Vergleich mit R134a erfordert, sind aber technisch anspruchsvollere Abdichtungen erforderlich. Daher werden üblicherweise Axialgleitringdichtungen verwendet, bei denen durch Zusammenwirken von Gleitring und Gegenring, die gegeneinander vorgespannt sind, eine ausreichende Abdichtung gegenüber der hohen Druckdifferenz möglich ist. Die Axialgleitringdichtung kann aber nicht mehr auf der Außenseite des Gehäuses montiert werden, sondern muß im Inneren des Gehäuses, beispielsweise hinter einem Anschlußdeckel, montiert werden. Ferner entsteht durch die Relativdrehung zwischen dem Gleitring und dem Gegenring ein solches Maß an Reibungswärme, daß eine kontrollierte Abfuhr wünschenswert erscheint. Allerdings ist bei Axialkolbenverdichtern für Fahrzeug-Klimaanlagen kein separater Schmiermittelkreislauf vorgesehen, der zur Abfuhr der Reibungswärme im Bereich des Gleitrings verwendet werden könnte, und auch der im Inneren des Gehäuses des Axialkolbenverdichters vorhandene Schmiermittelnebel ist nicht ausreichend, um die auftretende Reibungswärme abzuführen.

Ferner ist aus der EP 0 864 787 A2 eine Dichtungskonstruktion für einen Kompressor bekannt, der beim Betrieb von Kühlanlagen Verwendung findet. Dort ist ein drehbare Dichtungsring in steifer bzw. starrer Weise mit der Antriebswelle der dortigen Vorrichtung verbunden. Die Verbindung zwischen der drehbaren Dichtung und dem Antriebsschaft ist durch eine Klemmverbindung hergestellt und lösbar, was dazu führt, daß bei einer eventuellen Verwendung in einem CO₂-Axialkolbenverdichter unter dein Einfluß der dort auftretenden hohen Drücke und Temperaturen ein Spiel vorhanden ist bzw. wäre und ein exakter Sitz des Dichtungsrings nicht gewährleistet ist. Durch die Bewegung der Antriebswelle in Zusammenwirkung mit dem Reibkontakt des Gleitrings und aufgrund einer bei hohen Gehäusetemperaturen zwangsläufig vorhandenen thermischen Ausdehnung insbesondere der Metallkomponenten ist ferner ein sicherer Sitz des drehbaren Gegenrings nicht sichergestellt, was zu Undichtigkeiten des Axialkolbenverdichters führen kann. Außerdem ist der Gegenstand der EP 0 864 787 A2 aufwendig hinsichtlich seiner Montage und demnach entsprechend kostenintensiv.

Die Aufgabe der Erfindung besteht somit darin, eine Wellenabdichtung bereitzustellen, die einfach und kostengünstig zu montieren ist und eine gute Ableitung der auftretenden Reibungswärme ermöglicht.

### Vorteile der Erfindung

Bei einem erfindungsgemäßen Verdichter mit den Merkmalen des kennzeichnenden Teils des Patentanspruchs 1 ergibt sich, da der Gegenring, einstückig mit dem Abschlußdeckel ausgeführt ist, ein verringerter Aufwand bei der Montage. Da der Gegenring selbst nicht mehr so stabil sein muß, daß er als separates Bauteil handhabbar und auch montierbar sein muß, läßt er sich mit einer wesentlich geringeren Dicke ausführen als herkömmliche Gegenringe, die beispielsweise in eine Aufnahme eingepreßt sind. Die geringere Dicke des Gegenringes bietet zwei Vorteile. Zum einen ergibt sich eine geringere Baulänge. Zum anderen wird eine verbesserte Wärmeabfuhr erreicht. Die geringe Dicke des Gegenrings ermöglicht es nämlich, trotz der üblicherweise sehr schlechten Wärmeleitfähigkeit des Materials, aus dem solche Gegenringe bestehen, eine ausreichende Wärmeabfuhr zu dem Bauteil, mit dem er einstückig ausgeführt ist zu gewährleisten. Die Wärmeleitfähigkeit ist gegenüber Konstruktionen aus dem Stand der Technik auch dadurch verbessert, daß der Gegenring nunmehr unmittelbar mit dem entsprechenden Bauteil verbunden ist und nicht mehr durch beispielsweise eingepreßte O-Ringe, wie sie im Stand der Technik zur Abdichtung des Gegenringes verwendet wurden, partiell gegenüber dem ihn tragenden Bauteil isoliert ist.

Unter dem Begriff "einstückig ausgeführt" im Sinne dieser Anmeldung wird dabei zum einen eine Einheit verstanden, bei der der Gegenring unlösbar mit dem ihn tragenden Bauteil verbunden ist, und zum anderen eine solche Ausgestaltung des Bauteils, bei der der Gegenring durch einen Abschnitt des Bauteils selbst gebildet ist.

Der Gegenring besteht aus einem keramischen Material. Auf diese Weise ergibt sich ein besonders verschleißfester Gegenring, der beispielsweise mit dem ihn tragenden Bauteil verklebt ist.

Der Gegenring besteht vorzugsweise aus SiC. Auch Wolframkarbid ist ein geeignetes Material. Es kann dann als Material für den Gleitring.imprägnierte Hartkohle verwendet werden, was sich als Reibpaarung bewährt hat. Es wird bei einer solchen Reibpaarung vorzugsweise das Material mit der besseren Wärmeleitfähigkeit, in diesem Fall SiC mit einer Wärmeleitfähigkeit von 125 W/mK, für den Gegenring verwendet, der dann aufgrund seiner einstückigen Ausführung mit dem ihn tragenden Bauteil die auftretende Reibungswärme der Axialgleitringdichtung besser abführt als bei einer Gestaltung, bei der die imprägnierte Hartkohle mit einer Wärmeleitfähigkeit von 25 W/mK die Wärmeableitung zum Gehäuse vornehmen müßte.

Gemäß der bevorzugten Ausführungsform der Erfindung ist vorgesehen, daß der Gleitring auf seiner mit dem Gegenring zusammenwirkenden Lauffläche mit einer Nut versehen ist. Diese Nut wirkt als Öltasche. Durch die Unterbrechung der Lauffläche des Gleitringes liegen dann quasi zwei Laufflächen in Reihe hintereinander, was die Effizienz der Abdichtung steigert. Alternativ könnte auch der Gegenring mit einer Nut versehen sein. Es ist auch möglich, die Lauffläche des Gegenringes konvex oder konkav auszubilden, um Verformungen durch Wärmeeinwirkung zu berücksichtigen.

In einer weiteren bevorzugten Ausführungsform besteht das Gehäuse aus Aluminium bzw. einer Aluminiumlegierung.

Bei einem erfindungsgemäßen Axialkolbenverdichter ergibt sich der Vorteil, daß eine besonders gute Abfuhr der auftretenden Reibungswärme vom Gegenring unmittelbar in das Gehäuse des Verdichters möglich ist. Somit ergibt sich eine geringere Erwärmung der Axialgleitringdichtung, was zu geringeren thermischen und mechanischen Verwerfungen und Verformungen führt. Weiterhin ergibt sich eine vereinfachte Montage, da der Gegenring nicht separat in den Abschlußdeckel eingesetzt werden muß. Unter Abschlußdeckel wird hierbei das Teilstück des Gehäuses verstanden, das mit der Durchtrittsöffnung für die Antriebswelle versehen ist; dieses Teilstück kann je nach der konstruktiven Ausgestaltung und der Art der Montage des Verdichters auch das zentrale Teilstück des Gehäuses sein. Auch ergeben sich Kostenvorteile, da gegenüber dem Stand der Techno zwei Bauteile eingespart werden, nämlich der Gegenring als separates Bauteil und der zu Ab-dichtung des Gegenringes erforderliche O-Ring. Falls es zu einer Leckage im Bereich der Axialgleitringdichtung kommt, kann durch einen einfachen Austausch des Abschußdeckels mit geringem Aufwand ein neuer Gegenring montiert werden.

Vorteilhafte Ausgestaltungen der Erfindung ergeben sich aus den Unteransprüchen.

### Zeichnungen

Die Erfindung wird nachfolgend unter Bezugnahme auf die beigefügten Zeichnungen beschrieben. In diesen zeigen:
- Figur 1 in einer schematischen Schnittansicht einen Axialkolbenverdichter nach dem Stand der Technik;
- Figur 2 in vergrößertem Maßstab einen erfindungsgemäßen Axialkolbenverdichter in einem Ausschnitt entsprechend dem Bereich II von Figur 1.

Bei einem erfindungsgemäßen Axialkolbenverdichter gemäß Anspruch 14 ergibt sich der Vorteil, daß eine besonders gute Abfuhr der auftretenden Reibungswärme vom Gegenring unmittelbar in das Gehäuse des Verdichters möglich ist. Somit ergibt sich eine geringere Erwärmung der Axialgleitringdichtung, was zu geringeren thermischen und mechanischen Verwerfungen und Verformungen führt. Weiterhin ergibt sich eine vereinfachte Montage, da der Gegenring nicht separat in den Abschlußdeckel eingesetzt werden muß. Unter Abschlußdeckel wird hierbei das Teilstück des Gehäuses verstanden, das mit der Durchtrittsöffnung für die Antriebswelle versehen ist; diese Teilstück kann je nach der konstruktiven Ausgestaltung und der Art der Montage des Verdichters auch das zentrale Teilstück des Gehäuses sein. Auch ergeben sich Kostenvorteile, da gegenüber dem Stand der Technik zwei Bauteile eingespart werden, nämlich der Gegenring als separates Bauteil und der zur Abdichtung des Gegenringes erforderliche O-Ring. Falls es zu eine Leckage im Bereich des Axialgleitringdichtung kommt, kann durch einen einfachen Austausch des Abschlußdeckels mit geringem Aufwand ein neuer Gegenring montiert werden.

Vorteilhafte Ausgestaltungen der Erfindung ergeben sich aus den Unteransprüchen.

### Zeichnungen

Die Erfindung wird nachfolgend unter Bezugnahme auf die beigefügten Zeichnungen beschrieben. In diesen zeigen:

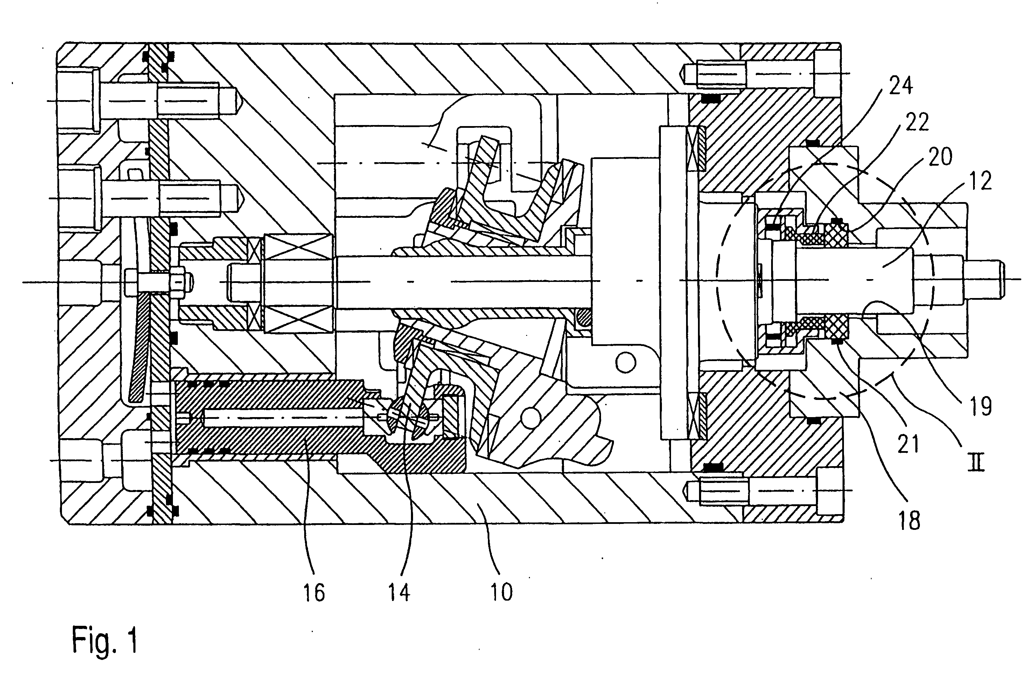

- Figur 1 in einer schematischen Schnittansicht einen Axialkolbenverdichter nach dem Stand der Technik;

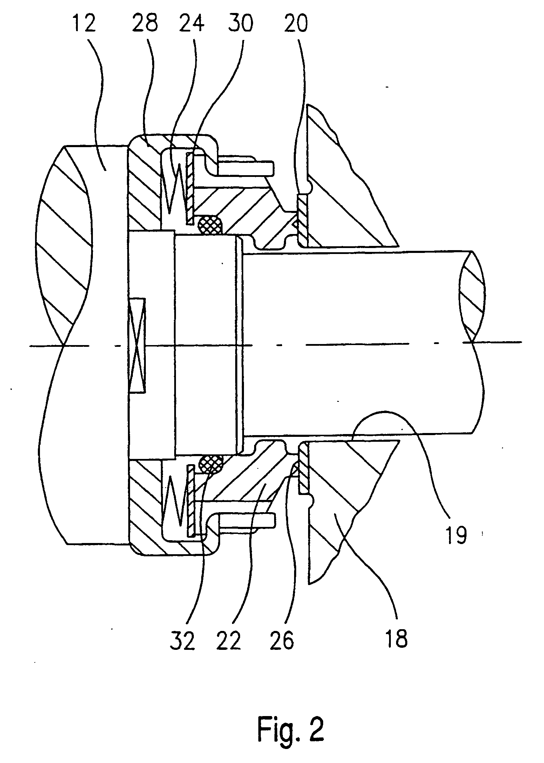

- Figur 2 in vergrößertem Maßstab einen erfindungsgemäßen Axialkolbenverdichter in einen Ausschnitt entsprechend dem Bereich II von Figur 1.

### Beschreibung des Ausführungsbeispiels

In Figur 1 ist ein Axialkolbenverdichter nach dem Stand der Technik gezeigt. Dieser enthält ein Gehäuse 10, in welchem drehbar eine Antriebswelle 12 gelagert ist. Auf der Antriebswelle ist eine Taumelscheibe 14 angebracht, die mit Kolben 16 zusammenwirkt. In Figur 1 ist nur ein einziger Kolben zu sehen; tatsächlich sind bis zu sieben Kolben vorgesehen, die jeweils in einem Zylinder translatorisch verschiebbar sind. Im Bereich des Austritts der Antriebswelle 12 aus dem Gehäuse 10 ist ein Abschlußdeckel 18 vorgesehen, der mit einer Durchtrittsbohrung 19 versehen ist, durch die hindurch die Antriebswelle 12 aus dem Gehäuse 10 austritt. In den Abschlußdeckel ist ein Gegenring 20 mit einem O-Ring 21 eingepreßt. An dem Gegenring 20 liegt ein Gleitring 22 an, der von einer Feder 24 gegen den Gegenring beaufschlagt wird. Auf diese Weise ist eine Axialgleitringdichtung gebildet, die das Gehäuse im Bereich der Durchtrittsbohrung 19 gegenüber dem Außenraum abdichtet.

In Figur 2 ist die Ausgestaltung der Abdichtung im Bereich des Durchtritts der Antriebswelle 12 durch den Abschlußdeckel bei einem erfindungsgemäßen Axialkolbenverdichter gezeigt. Der Gegenring 20 ist einstückig mit dem Abschlußdeckel 18 ausgebildet, und zwar als dünne Schicht aus SiC. An dem Gegenring 20 liegt der Gleitring 22 an, der beispielsweise aus imprägnierter Hartkohle bestehen kann und in seiner Lauffläche mit einer V-förmigen Nut 26 versehen ist.

Auch bei der erfindungsgemäßen Ausgestaltung wird eine Feder 24 verwendet, die den Gleitring 22 gegen den Gegenring 20 beaufschlagt. Der Gleitring ist im Inneren eines Federhalters 28 angeordnet, der zusammen mit einer Fangplatte 30 gewährleistet, daß eine in sich abgeschlossene Baugruppe gebildet ist. Zwischen dem Gleitring 22 und der Antriebswelle 12 ist ein O-Ring 32 angeordnet, der gewährleistet, daß der Gleitring 22 drehfest auf der Antriebswelle 12 montiert ist, so daß bei einer Drehung der Antriebswelle die Relativdrehung zwischen dem Gleitring 22 und dem Gegenring 20 auftritt.

Grundsätzlich ist auch eine Umkehr der Anordnung von Gleitring und Gegenring möglich: Der Gegenring könnte einstückig mit der Antriebswelle ausgebildet sein, beispielsweise an einem Wellenabsatz, und der Gleitring könnte am Gehäuse angebracht sein und gegen den Gegenring vorgespannt sein.

### Bezugszeichenliste

- 10:: Gehäuse
- 12:: Antriebswelle
- 14:: Taumelscheibe
- 16:: Kolben
- 18:: Abschlußdeckel
- 19:: Durchtrittsbohrung
- 20:: Gegenring
- 21:: O-Ring
- 22:: Gleitring
- 24:: Feder
- 26:: Nut
- 28:: Federhalter
- 30:: Fangplatte
- 32:: O-Ring

## Patentansprüche

1. CO₂-Axialkolbenverdichter mit einer Antriebswelle (12), einem einen Abschlußdeckel (18) umfassenden Gehäuse, wobei der Abschlußdeckel (18) mit einer Durchtrittsbohrung (19) versehen ist, durch die hindurch die Antriebswelle aus dem Gehäuse hervorsteht, und mit einer Axialgleitringdichtung mit Gleitring (22) und Gegenring (20), die zwischen den beiden Bauteilen Antriebswelle (12).und Abschlußdeckel (18) abdichtet,
**dadurch gekennzeichnet, daß**
der Gegenring (20) aus keramischem Material besteht und einstückig mit dem Abschlußdeckel (18) ausgeführt ist.

2. Axialkolbenverdichter nach Anspruch 1,
**dadurch gekennzeichnet, daß**
der Gegenring (20) aus SiC besteht.

3. Axialkolbenverdichter nach Anspruch 1 oder 2,
**dadurch gekennzeichnet, daß**
der Gleitring (22) auf seiner mit dem Gegenring (20) zusammenwirkenden Lauffläche mit einer Nut versehen ist.

4. Axialkolbenverdichter nach Anspruch 1 oder 2,
**dadurch gekennzeichnet, daß**
der Gegenring (20) mit einer Nut versehen ist.

5. Axialkolbenverdichter nach einem der vorhergehenden Ansprüche,
**dadurch gekennzeichnet, daß**
das Gehäuse (10) aus Aluminium bzw. einer Aluminiumlegierung besteht.

## Claims

1. CO₂ axial piston compressor having a drive shaft (12) and a housing which embraces a closure cover (18), the closure cover (18) being provided with a through-hole (19) through which the drive shaft projects out from the housing, and having an axial sliding ring seal with a sliding ring (22) and a counter-ring (20), which seal seals between the two components: drive shaft (12) and closure cover (18),
**characterised in that**
the counter-ring (20) is made of ceramic material and is of integral construction with the closure cover (18).

2. Axial piston compressor according to claim 1,
**characterised in that**
the counter-ring (20) is made of SiC.

3. Axial piston compressor according to claim 1 or 2,
**characterised in that**,
on its contact surface co-operating with the counter-ring (20), the sliding ring (20) is provided with a groove.

4. Axial piston compressor according to claim 1 or 2,
**characterised in that**
the counter-ring (20) is provided with a groove.

5. Axial piston compressor according to one of the preceding claims,
**characterised in that**
the housing (10) is made of aluminium or an aluminium alloy.

## Revendications

1. Compresseur CO₂ à pistons axiaux avec un arbre d'entraînement (12), un corps englobant un couvercle (18), sachant que le couvercle (18) est muni d'un forage de passage (19), à travers lequel l'arbre d'entraînement dépasse du corps, et avec une garniture mécanique axiale d'étanchéité avec bague de glissement (22) et contre-bague (20), qui assure l'étanchéité entre les deux parties de construction arbre d'entraînement (12) et couvercle (18),
**caractérisé en ce que** la contre-bague (20) est composée de matériau céramique et qu'elle est exécutée d'une seule pièce avec le couvercle (18).

2. Compresseur à pistons axiaux selon la revendication 1, **caractérisé en ce que** la contre-bague (20) est en SiC.

3. Compresseur à pistons axiaux selon la revendication 1 ou 2, **caractérisé en ce que** la bague de glissement (22) est munie sur sa surface de roulement agissant conjointement avec la contre-bague (20) d'une rainure.

4. Compresseur à pistons axiaux selon la revendication 1 ou 2, **caractérisé en ce que** la contre-bague (20) est munie d'une rainure.

5. Compresseur à pistons axiaux selon l'une quelconque des revendications précédentes, **caractérisé en ce que** le corps (10) est en aluminium ou en alliage d'aluminium.
